# EUROPEAN PATENT APPLICATION

(11) **EP 4 582 951 A1**
(43) Date of publication of application: **09.07.2025**
(21) Application number: 24204813.0
(22) Date of filing: 04.10.2024
(51) Int. Cl.: G06F 9/54, H04L 47/62, H04L 47/6275

(54) **NETWORK MESSAGE PROCESSING METHOD AND DEVICE**

(30) Priority: 03.01.2024 CN 202410013005
(71) Applicant: Beijing Volcano Engine Technology Co., Ltd., Beijing 100190 (CN)
(72) Inventor: CHENG, Xin, Beijing, 100028 (CN)
(74) Representative: Dentons UK and Middle East LLP

(57) **Abstract**

The present disclosure provides a network message processing method and a device. The method includes: reading a first network message from a first queue maintained in a first server; querying a queue mapping table maintained in a data processing unit to determine a destination second queue to which the first network message is to be transmitted, and storing the first network message in the destination second queue, where the queue mapping table is used to record a mapping relationship between first queues maintained in the first server and second queues maintained in the data processing unit, and a quantity of the first queues is greater than a quantity of the second queues; and calling a message distribution module in the data processing unit, and reading, through the message distribution module, the first network message from the destination second queue and transmitting the first network message to a destination second server through a network. According to the present disclosure, a one-to-one mapping relationship between the queues in the first server and the queues in the data processing unit is decoupled, to reduce the quantity of the queues in the data processing unit, thereby realizing reduction of resource consumption in the data processing unit.

## Description

### TECHNICAL FIELD

Embodiments of the present disclosure relate to the field of message forwarding, and in particular, to a network message processing method and a device.

### BACKGROUND

A DPU (Data Processing Unit) is a special-purpose processor. The DPU, which is connected to a server, processes network messages of the server, and sends the network messages of the server to a second server, to realize provision of a network for the server.

Currently, queues with the same quantity as those in the server need to be set in the DPU, and then a one-to-one mapping relationship between the queues in the DPU and the queues in the server is established, to implement forwarding of network messages. However, this method requires consumption of a large amount of resources of the DPU.

### SUMMARY

Embodiments of the present disclosure provide a network message processing method and a device, to realize reduction of resource consumption of a DPU.

According to a first aspect, an embodiment of the present disclosure provides a network message processing method, including: reading a first network message from a first queue maintained in a first server; querying a queue mapping table maintained in a data processing unit to determine a destination second queue to which the first network message is to be transmitted, and storing the first network message in the destination second queue, where the queue mapping table is used to record a mapping relationship between first queues maintained in the first server and second queues maintained in the data processing unit, and a quantity of the first queues is greater than a quantity of the second queues; and calling a message distribution module in the data processing unit, and reading, through the message distribution module, the first network message from the destination second queue and transmitting the first network message to a destination second server through a network.

According to a second aspect, an embodiment of the present disclosure provides a network message processing device, including:
a reading unit, configured to read a first network message from a first queue maintained in a first server;
a querying unit, configured to query a queue mapping table maintained in a data processing unit to determine a destination second queue to which the first network message is to be transmitted, and store the first network message in the destination second queue, where the queue mapping table is used to record a mapping relationship between first queues maintained in the first server and second queues maintained in the data processing unit, and a quantity of the first queues is greater than a quantity of the second queues; and
a calling unit, configured to call a message distribution module in the data processing unit, and read, through the message distribution module, the first network message from the destination second queue and transmit the first network message to a destination second server through a network.

According to a third aspect, an embodiment of the present disclosure provides an electronic device, including: at least one processor and a memory;
where the memory stores computer-execution instructions; and
the at least one processor executes the computer-execution instructions stored in the memory, to cause the at least one processor to perform the network message processing method according to the above first aspect.

According to a fourth aspect, an embodiment of the present disclosure provides a computer-readable storage medium, where the computer-readable storage medium stores computer-execution instructions, and when a processor executes the computer-execution instructions, the network message processing method according to the above first aspect is implemented.

According to a fifth aspect, one or more embodiments of the present disclosure provide a computer program product, where the computer program product includes computer-execution instructions, and when a processor executes the computer-execution instructions, the network message processing method according to the above first aspect is implemented.

The network message processing method and device provided in the embodiments include: reading the first network message from the first queue maintained in the first server; querying the queue mapping table maintained in the data processing unit to determine the destination second queue to which the first network message is to be transmitted, and storing the first network message in the destination second queue, where the queue mapping table is used to record the mapping relationship between the first queues maintained in the first server and the second queues maintained in the data processing unit, and the quantity of the first queues is greater than the quantity of the second queues; and calling the message distribution module in the data processing unit, and reading, through the message distribution module, the first network message from the destination second queue and transmitting the first network message to the destination second server through the network.

### BRIEF DESCRIPTION OF THE DRAWINGS

In order to more clearly describe the technical solutions in the embodiments of the present disclosure or the prior art, the accompanying drawings required for describing the embodiments or the prior art will be briefly described below. Apparently, the accompanying drawings in the following description show some embodiments of the present disclosure, and a person of ordinary skill in the art may still derive other drawings from these accompanying drawings without creative efforts.
FIG. 1 is a schematic diagram of a network message processing method according to the related art.
FIG. 2 is a flowchart of steps of a network message processing method according to an embodiment of the present disclosure.
FIG. 3 is a schematic diagram of a network message processing method according to an embodiment of the present disclosure.
FIG. 4 is a flowchart of steps of another network message processing method according to an embodiment of the present disclosure.
FIG. 5 is a flowchart of steps of still another network message processing method according to an embodiment of the present disclosure.
FIG. 6 is a structural block diagram of a network message processing device according to an embodiment of the present disclosure.
FIG. 7 is a schematic diagram of a hardware structure of an electronic device according to an embodiment of the present disclosure.

### DESCRIPTION OF EMBODIMENTS

In order to make the objectives, technical solutions, and advantages of the embodiments of the present disclosure clearer, the technical solutions in the embodiments of the present disclosure will be described clearly and completely below with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

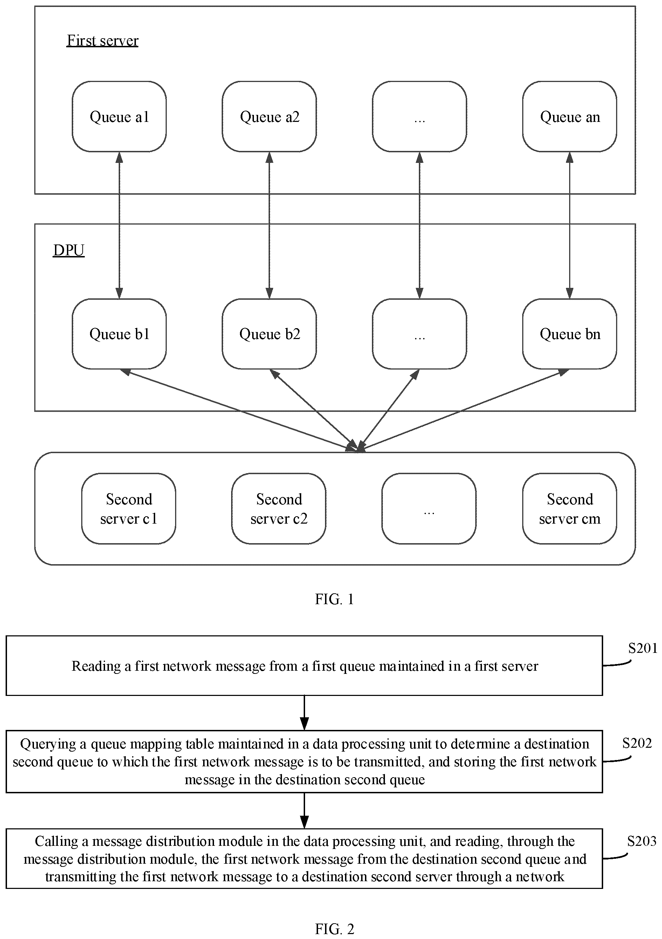

In the related art, a data processing unit shown in FIG. 1 is used to implement message forwarding. In FIG. 1, a first server includes queues al to an, and n is a positive integer greater than 1. A DPU includes queues b1 to bn. The queues in the first server and the queues in the DPU are in a one-to-one correspondence. The DPU is configured to forward a network message in the first server to a second server. In FIG. 1, second servers include second servers c1 to cm, and m is a positive integer. It can be seen that in the related art, the DPU needs to implement a large number of queues, and these queues are used to temporarily save network messages to be processed. Implementing these queues requires consumption of a large amount of hardware and software resources.

In FIG. 1, when there are n queues on the first server, n queues also need to be implemented on the DPU, and n is generally greater than or equal to 1024. The queues on the first server are in a one-to-one correspondence with the queues on the DPU. The queues on the DPU are responsible for forwarding network messages of the first server to an external network (the second servers), and forwarding network messages of the external network to the first server. The procedure is as follows: first, the first server places a first network message in a certain queue of the first server, for example, the queue a1; then, the DPU takes out the network message in the queue a1 and places the network message in the queue b1; and then, the DPU takes out the network message in the queue b1 and sends the network message to the external network. It can be seen that this procedure requires a large number of queues to be implemented on the DPU, consuming a large amount of hardware resources. In addition, because there are many queues in the DPU, it is necessary to consume a large amount of software resources for processing, which will result in poor network message processing performance of the DPU. Further, the queues in the first server are in a one-to-one correspondence with the queues in the DPU, and some state information, such as a queue enabled state, a queue disabled state, and other states, needs to be synchronized between the queues in the one-to-one correspondence, which will result in complexity of a control plane design for synchronizing these states.

Based on the above problems, the network message processing methods provided by the present disclosure are applied to a DPU. In the present disclosure, by setting a relatively small number of second queues in the DPU, consumption of hardware and software resources in the DPU can be reduced. In addition, the relatively small quantity of second queues occupy less resources in the DPU, thereby improving network message processing performance of the DPU. Further, the one-to-one mapping relationship between the first queues of the first server and the second queues is decoupled, which can reduce the design of synchronizing states in the control plane, thereby simplifying the control plane design.

FIG. 1 is an application scenario of the present disclosure, and is only one of the scenario examples. The embodiments of the present disclosure can be applied to network message processing methods in any scenarios.

Reference is made to FIG. 2, which is a schematic flowchart of a network message processing method according to an embodiment of the present disclosure. As shown in FIG. 2, the network message processing method is applied to a data processing unit. In the embodiments of the present disclosure, the data processing unit implements a function of simulating a hardware network card device for a first server, forwarding a network message of the first server to an external network, and forwarding a network message of the external network to the first server. Specifically, the network message processing method specifically includes the following steps.

S201: reading a first network message from a first queue maintained in a first server.

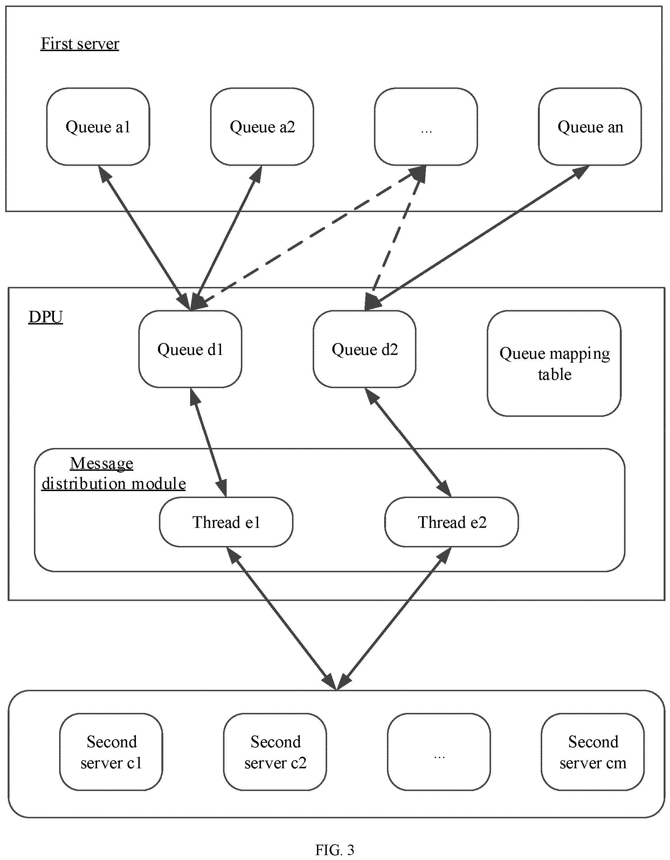

Referring to FIG. 3, compared with FIG. 1, the present disclosure does not make improvements on the first server and a second server, but only makes improvements on a DPU.

The first server includes a plurality of first queues, for example, queues a1 to an in FIG. 3. A destination first queue is one of the plurality of first queues, and the destination first queue stores the first network message.

Exemplarily, the first server places the first network message in one of the first queues, for example, the queue a1 of the first server, and a data processing unit obtains this first network message from this first queue (for example, the queue a1).

S202: querying a queue mapping table maintained in a data processing unit to determine a destination second queue to which the first network message is to be transmitted, and store the first network message in the destination second queue.

The queue mapping table maintains a mapping relationship between a plurality of first queues and a plurality of second queues, where one first queue is mapped to only one second queue, and one second queue supports mapping of a plurality of first queues.

Specifically, the destination second queue is one of the plurality of second queues in the data processing unit, where the queue mapping table is used to record the mapping relationship between the first queues maintained in the first server and the second queues maintained in the data processing unit, and the quantity of the first queues is greater than the quantity of the second queues.

In the embodiments of the present disclosure, the quantity of the second queues is less than the quantity of the first queues. Optionally, in the present disclosure, single-digit second queues can be set, such as 2 or 4. The quantity of the first queues is greater than or equal to 1024.

In addition, the queue mapping table stores the mapping relationship between the first queues and the second queues, where one first queue corresponds to one second queue, and one second queue can correspond to a plurality of first queues. Further, an initial mapping relationship in the queue mapping table may be preconfigured. As shown in FIG. 3, the queue a1 is mapped to queue d1; the queue a2 is mapped to queue d1; for the first queues in the queues a3 to a(n-1), some may be mapped to the queue d1, and some may be mapped to queue d2; and the queue an is mapped to the queue d2.

Exemplarily, referring to FIG. 3, if the first queue where the first network message is located is the queue a1, it may be determined that the destination second queue is the queue d1, according to the mapping relationship in the queue mapping table.

S203: calling a message distribution module in the data processing unit, and reading, through the message distribution module, the first network message from the destination second queue and transmitting the first network message to a destination second server through a network.

In the present disclosure, the first network message is stored in the destination second queue, to be forwarded to a corresponding second server.

The reading, through the message distribution module, the first network message from the destination second queue and transmitting the first network message to the destination second server through the network includes: reading, through the message distribution module, the first network message from the destination second queue, identifying the destination second server to which the first network message is to be transmitted, and transmitting the first network message to the destination second server through the network.

Further, when obtaining the first network message, the DPU may determine the destination first queue from which the first network message comes, and then add a queue identifier of the destination first queue to the first network message before storing the first network message in the destination second queue. Thus, the first network message stored in the destination second queue includes the queue identifier of the destination first queue.

Before sending the first network message to the corresponding destination second server, the method includes: extracting destination address information in the first network message; determining a plurality of second servers corresponding to the destination first queue; and determining the destination second server from the plurality of second servers according to the destination address information.

In the embodiments of the present disclosure, each first queue may correspond to a plurality of second servers. For example, referring to FIG. 3, the queues a1 to a32 all correspond to second servers c1 to c50, and the queues a33 to a64 all correspond to second servers (external network services) c71 to c100.

Further, the first network message includes the destination address information, and the destination address information may be an IP address of the destination second server.

It can be understood that in the present disclosure, a plurality of second servers may first be determined through the queue identifier of the destination first queue. For example, if the queue identifier of the destination first queue is the queue a1, the determined plurality of second servers are the second servers c1 to c50. Then, a second server corresponding to the destination address information is determined from the plurality of second servers as the destination second server (for example, the second server c18). It can be seen that in the present disclosure, a part of the second servers are first determined through the queue identifier, which can narrow the range of the second servers, thereby improving efficiency of searching for the destination second server.

In the embodiments of the present disclosure, first, the quantity of the second queues in the DPU is reduced, so that only a small number of second queues (for example, single-digit second queues) are set in the DPU, thereby saving a large amount of hardware resources and software resources, and improving network message processing capability of the DPU. Second, the first queues and the second queues are decoupled, so that there is no longer a one-to-one mapping relationship between the first queues in the first server and the second queues in the DPU, and it is realized that the network message in the first queue can be sent to any one of the second queues according to configuration of the queue mapping table. In addition, states do not need to be synchronized between the first queues and the second queues, thereby simplifying the control plane design. Finally, the message distribution module is added to the DPU. When there are network messages of a plurality of first queues in one second queue, the message distribution module can identify the network messages of different first queues, and correctly distribute the first network message to the second server. In addition, a network message of a second server can also be correctly forwarded to a first queue.

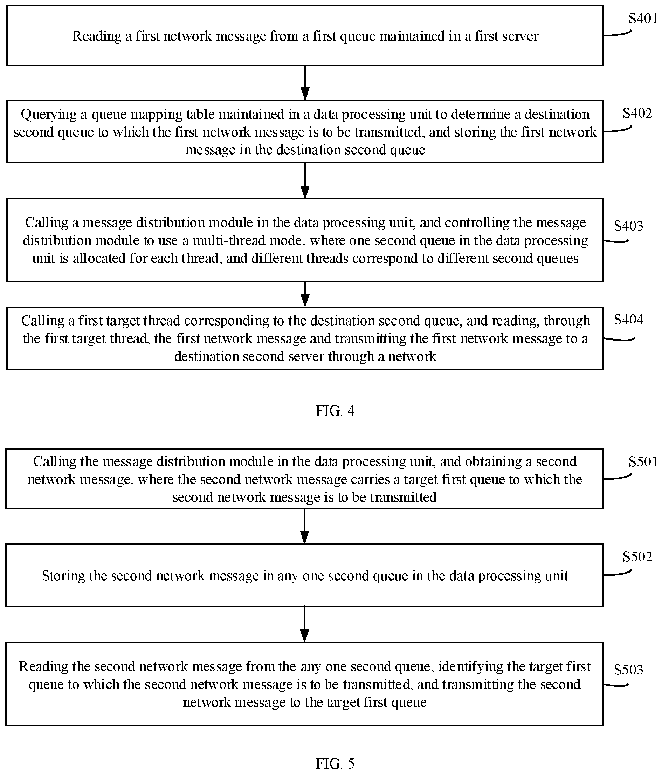

Reference is made to FIG. 4, which is a schematic flowchart of another network message processing method according to an embodiment of the present disclosure. As shown in FIG. 4, the network message processing method specifically includes the following steps.

S401: reading a first network message from a first queue maintained in a first server.

For a specific implementation process of this step, reference may be made to S201, which will not be described here again.

S402: querying a queue mapping table maintained in a data processing unit to determine a destination second queue to which the first network message is to be transmitted, and storing the first network message in the destination second queue.

For a specific implementation process of this step, reference may be made to S202, which will not be described here again.

S403: calling a message distribution module in the data processing unit, and controlling the message distribution module to use a multi-thread mode, where one second queue in the data processing unit is allocated for each thread, and different threads correspond to different second queues.

S404: calling a first target thread corresponding to the destination second queue, and reading, through the first target thread, the first network message and transmitting the first network message to a destination second server through a network.

Further, the reading, through the first target thread, the first network message and transmitting the first network message to the destination second server through the network includes: determining the first queue from which the first network message comes, and determining a second target thread having a mapping relationship with the first queue, where each first queue of the first server is provided with a corresponding thread; if the second target thread is not a same thread as the first target thread, reading, through the first target thread, the first network message and forwarding the first network message to the second target thread; and transmitting, through the second target thread, the first network message to the destination second server through the network.

Further, the method further includes: determining a target second queue corresponding to the second target thread; and updating, in the queue mapping table, a mapping relationship between the destination first queue and the destination second queue to a mapping relationship between the destination first queue and the target second queue.

The message distribution module uses a multi-thread mode, and threads are in a one-to-one correspondence with the second queues.

In the present disclosure, the message distribution module uses a multi-thread queue self-allocation mechanism to establish a mapping relationship between the second queues and the threads, that is, one thread is automatically allocated to each second queue, and the thread forwards the first network message in the corresponding second queue.

In the embodiments of the present disclosure, after the mapping relationship between the second queues and the threads is established by using the multi-thread queue self-allocation mechanism, the first target thread corresponding to the destination second queue is determined according to the mapping relationship. Exemplarily, referring to FIG. 3, if the destination second queue is the queue d1, the corresponding first target thread is thread e1.

Further, the first target thread is used to obtain the first network message from the destination second queue. If the first target thread corresponds to the destination first queue, the first network message may be forwarded to a corresponding second server. If the first target thread does not correspond to the destination first queue, the second target thread corresponding to the destination first queue is determined from a plurality of threads.

It can be understood that the message distribution module has a self-coordination mechanism, that is, each first queue has one corresponding thread, and one thread may correspond to a plurality of first queues. In this way, it can be ensured that first network messages can be orderly sent to second servers.

Exemplarily, referring to FIG. 3, if the destination second queue (the queue d1) corresponds to the first target thread (the thread e1), but the destination first queue (the queue a1) does not correspond to the first target thread (the thread e1), then the second target thread (the thread e2) corresponding to the destination first queue (the queue a1) is determined.

In the embodiments of the present disclosure, the first target thread forwards the obtained first network message to the second target thread, and the second target thread sends the first network message to the corresponding destination second server.

The sending, through the second target thread, the first network message to the corresponding destination second server through the network includes: extracting destination address information in the first network message; determining a plurality of second servers corresponding to the destination first queue; and determining the destination second server from the plurality of second servers according to the destination address information.

In the embodiments of the present disclosure, the target second queue corresponding to the second target thread is determined based on the mapping relationship established in step S404.

Exemplarily, the target second queue (for example, the queue d2) corresponding to the second target thread (for example, the thread e2) is determined.

In the queue mapping table, the destination first queue has a mapping relationship with the destination second queue. After the update, the destination first queue has a mapping relationship with the target second queue. In a subsequent network message forwarding process, a network message in the destination first queue can be sent to the target second queue for storage, and the network message stored in the target second queue can be forwarded by a second target thread to a second server. This second target thread also corresponds to the destination first queue. Thus, it can be realized that the network message taken out by this second target thread can be sent to the external network by this second target thread, thereby avoiding a problem of network message loss and improving network message processing performance.

In an optional embodiment, referring to FIG. 5, which is a schematic flowchart of still another network message processing method, this flowchart shows a process in which the DPU forwards a network message of an external network to the first server. The network message processing method is based on the DPU shown in FIG. 3, and the network message processing method specifically includes the following steps.

S501: calling the message distribution module in the data processing unit, and obtaining a second network message, where the second network message carries a target first queue to which the second network message is to be transmitted.

In the embodiments of the present disclosure, the second network message sent by any second server is received through any thread in the message distribution module.

S502: storing the second network message in any one second queue in the data processing unit.

In the embodiments of the present disclosure, the distribution module may store the second network message in any one of the second queues.

S503: reading the second network message from the any one second queue, identifying the target first queue to which the second network message is to be transmitted, and transmitting the second network message to the target first queue.

The second network message carries a queue identifier of the target first queue, and the target first queue may be determined according to this queue identifier.

After the target first queue is determined, the second network message in the any one second queue is stored in the target first queue, to complete storage of the network message from the second server to the queue of the first server.

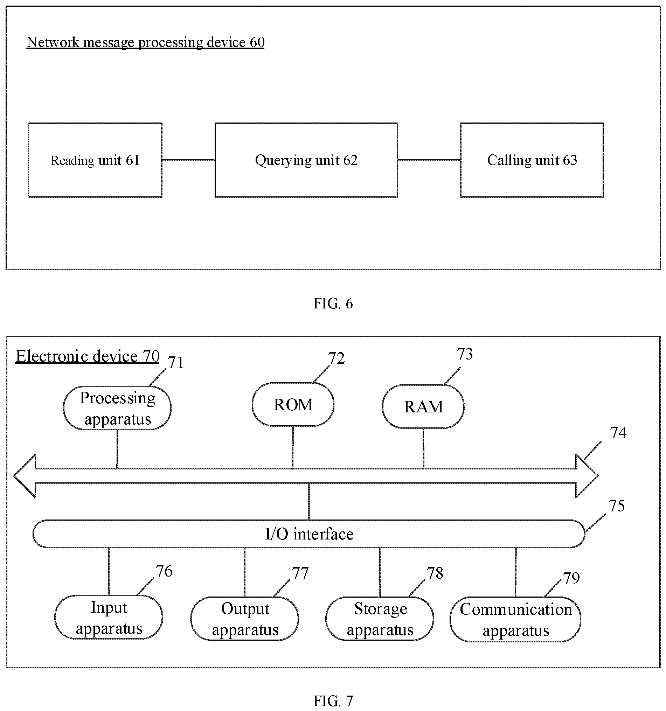

Corresponding to the network message processing methods in the foregoing embodiments, FIG. 6 is a structural block diagram of a network message processing device 60 according to an embodiment of the present disclosure. For ease of description, only parts related to the embodiments of the present disclosure are shown. As shown in FIG. 6, the network message processing device 60 specifically includes: a reading unit 61, a querying unit 62, and a calling unit 63.

The reading unit 61 is configured to read a first network message from a first queue maintained in a first server.

The querying unit 62 is configured to query a queue mapping table maintained in a data processing unit to determine a destination second queue to which the first network message is to be transmitted, and store the first network message in the destination second queue, where the queue mapping table is used to record a mapping relationship between first queues maintained in the first server and second queues maintained in the data processing unit, and a quantity of the first queues is greater than a quantity of the second queues.

The calling unit 63 is configured to call a message distribution module in the data processing unit, and read, through the message distribution module, the first network message from the destination second queue and transmit the first network message to a destination second server through a network.

In some embodiments, the calling unit 63 is specifically configured to: call the message distribution module in the data processing unit, and control the message distribution module to use a multi-thread mode, where one second queue in the data processing unit is allocated for each thread, and different threads correspond to different second queues; and call a first target thread corresponding to the destination second queue, and read, through the first target thread, the first network message and transmit the first network message to the destination second server through the network.

In some embodiments, when reading, through the first target thread, the first network message and transmitting the first network message to the destination second server through the network, the calling unit 63 is specifically configured to: determine the first queue from which the first network message comes, and determine a second target thread having a mapping relationship with the first queue, where each first queue of the first server is provided with a corresponding thread; if the second target thread is not a same thread as the first target thread, read, through the first target thread, the first network message and forward the first network message to the second target thread; and transmit, through the second target thread, the first network message to the destination second server through the network.

In some embodiments, the calling unit 63 is further configured to: determine a target second queue corresponding to the second target thread; and update, in the queue mapping table, a mapping relationship between the destination first queue and the destination second queue to a mapping relationship between the destination first queue and the target second queue.

In some embodiments, the network message processing device 60 further includes: a forwarding unit (not shown), configured to: call the message distribution module in the data processing unit, and obtain a second network message, where the second network message carries a target first queue to which the second network message is to be transmitted; store the second network message in any one second queue in the data processing unit; and read the second network message from the any one second queue, identify the target first queue to which the second network message is to be transmitted, and transmit the second network message to the target first queue.

In some embodiments, the queue mapping table maintains a mapping relationship between a plurality of first queues and a plurality of second queues, where one first queue is mapped to only one second queue, and one second queue supports mapping of a plurality of first queues.

In some embodiments, the calling unit 63 is specifically configured to: read, through the message distribution module, the first network message from the destination second queue, identify the destination second server to which the first network message is to be transmitted, and transmit the first network message to the destination second server through the network.

The network message processing device provided in this embodiment can be used to execute the technical solutions of the embodiments of the network message processing methods described above. The implementation principles and technical effects thereof are similar, and details are not described here again in this embodiment.

Reference is made to FIG. 7, which shows a schematic structural diagram of an electronic device 70 suitable for implementing embodiments of the present disclosure. The electronic device 70 may be a terminal device or a server. The terminal device may include, but is not limited to, mobile terminals such as a mobile phone, a notebook computer, a digital broadcast receiver, a personal digital assistant (PDA), a tablet computer (Portable Android Device, PAD), a portable multimedia player (Portable media player, PMP), a vehicle-mounted terminal (such as a vehicle navigation terminal) and the like, and fixed terminals such as a digital TV, a desktop computer and the like. The electronic device 70 shown in FIG. 7 is merely an example, and shall not impose any limitation on the functions and scope of use of the embodiments of the present disclosure.

As shown in FIG. 7, the electronic device 70 may include a processing apparatus (for example, a central processing unit, a graphics processing unit, etc.) 71, which may perform a variety of appropriate actions and processing according to a program stored in a read only memory (ROM) 72 or a program loaded from a storage apparatus 78 into a random access memory (RAM) 73. The RAM 73 further stores various programs and data required for the operation of the electronic device 70. The processing apparatus 71, the ROM 72, and the RAM 73 are connected to each other through a bus 74. An input/output (I/O) interface 75 is also connected to the bus 74.

Generally, the following apparatuses may be connected to the I/O interface 75: an input apparatus 76 including, for example, a touch screen, a touchpad, a keyboard, a mouse, a camera, a microphone, an accelerometer, a gyroscope, etc.; an output apparatus 77 including, for example, a liquid crystal display (LCD), a speaker, a vibrator, etc.; the storage apparatus 78 including, for example, a tape, a hard disk, etc.; and a communication apparatus 79. The communication apparatus 79 may allow the electronic device 70 to perform wireless or wired communication with other devices to exchange data. Although FIG. 7 shows the electronic device 70 having various apparatuses, it should be understood that it is not required to implement or have all of the shown apparatuses. It may be an alternative to implement or have more or fewer apparatuses.

In particular, according to embodiments of the present disclosure, the processes described above with reference to the flowcharts may be implemented as computer software programs. For example, an embodiment of the present disclosure includes a computer program product including a computer program carried on a computer-readable medium, where the computer program includes program code for performing the methods shown in the flowcharts. In such an embodiment, the computer program may be downloaded from a network through the communication apparatus 79 and installed, or installed from the storage apparatus 78, or installed from the ROM 72. When the computer program is executed by the processing apparatus 71, the above-mentioned functions defined in the methods of the embodiments of the present disclosure are performed.

It should be noted that the above-mentioned computer-readable medium of the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program, which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program code contained in the computer-readable medium may be transmitted by any suitable medium, including but not limited to: electric wires, optical cables, RF (radio frequency), etc., or any suitable combination thereof.

The above computer-readable medium may be contained in the above electronic device, or may exist independently without being assembled into the electronic device.

The above computer-readable medium carries one or more programs that, when executed by the electronic device, cause the electronic device to perform the methods shown in the above embodiments.

The computer program code for performing the operations of the present disclosure may be written in one or more programming languages or a combination thereof, where the programming languages include object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving a remote computer, the remote computer may be connected to a computer of a user over any kind of network, including a local area network (LAN) or a wide area network (WAN), or may be connected to an external computer (for example, connected to the Internet over an Internet service provider).

The flowcharts and block diagrams in the accompanying drawings illustrate architectures, functions, and operations of the possible implementations of the systems, the methods, and the computer program products according to various embodiments of the present disclosure. In this regard, each block in the flowcharts or block diagrams may represent a module, program segment, or part of code, and the module, program segment, or part of code contains one or more executable instructions for implementing the specified logical functions. It should also be noted that in some alternative implementations, the functions marked in the blocks may also occur in an order different from that marked in the accompanying drawings. For example, two blocks shown in succession may actually be performed substantially in parallel, or they may sometimes be performed in the reverse order, depending on the functions involved. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The units involved in the embodiments described in the present disclosure may be implemented in a software manner, or may be implemented in a hardware manner. The name of a unit does not constitute a limitation on the unit itself in some cases. For example, a first obtaining unit may also be described as "a unit for obtaining at least two Internet Protocol addresses".

The functions described herein above may be performed at least partially by one or more hardware logic components. For example, without limitation, exemplary types of hardware logic components that may be used include: a field programmable gate array (FPGA), an application specific integrated circuit (ASIC), application specific standard parts (ASSP,), a system on chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM, or flash memory), an optical fiber, a portable compact disk read-only memory (CD-ROM), an optical storage device, a magnetic storage device, or any suitable combination thereof.

According to a first aspect, one or more embodiments of the present disclosure provide a network message processing method, including: reading a first network message from a first queue maintained in a first server; querying a queue mapping table maintained in a data processing unit to determine a destination second queue to which the first network message is to be transmitted, and storing the first network message in the destination second queue, where the queue mapping table is used to record a mapping relationship between first queues maintained in the first server and second queues maintained in the data processing unit, and a quantity of the first queues is greater than a quantity of the second queues; and calling a message distribution module in the data processing unit, and reading, through the message distribution module, the first network message from the destination second queue and transmitting the first network message to a destination second server through a network.

According to one or more embodiments of the present disclosure, the calling the message distribution module in the data processing unit, and reading, through the message distribution module, the first network message from the destination second queue and transmitting the first network message to the destination second server through the network includes:
calling the message distribution module in the data processing unit, and controlling the message distribution module to use a multi-thread mode, where one second queue in the data processing unit is allocated for each thread, and different threads correspond to different second queues; and
calling a first target thread corresponding to the destination second queue, and reading, through the first target thread, the first network message and transmitting the first network message to the destination second server through the network.

According to one or more embodiments of the present disclosure, the reading, through the first target thread, the first network message and transmitting the first network message to the destination second server through the network includes:
determining the first queue from which the first network message comes, and determining a second target thread having a mapping relationship with the first queue, where each first queue of the first server is provided with a corresponding thread;
if the second target thread is not a same thread as the first target thread, reading, through the first target thread, the first network message and forwarding the first network message to the second target thread; and
transmitting, through the second target thread, the first network message to the destination second server through the network.

According to one or more embodiments of the present disclosure, the method further includes:
determining a target second queue corresponding to the second target thread; and
updating, in the queue mapping table, a mapping relationship between the destination first queue and the destination second queue to a mapping relationship between the destination first queue and the target second queue.

According to one or more embodiments of the present disclosure, the method further includes:
calling the message distribution module in the data processing unit, and obtaining a second network message, where the second network message carries a target first queue to which the second network message is to be transmitted;
storing the second network message in any one second queue in the data processing unit; and
reading the second network message from the any one second queue, identifying the target first queue to which the second network message is to be transmitted, and transmitting the second network message to the target first queue.

According to one or more embodiments of the present disclosure, the queue mapping table maintains a mapping relationship between a plurality of first queues and a plurality of second queues, where one first queue is mapped to only one second queue, and one second queue supports mapping of a plurality of first queues.

According to one or more embodiments of the present disclosure, the reading, through the message distribution module, the first network message from the destination second queue and transmitting the first network message to the destination second server through the network includes:
reading, through the message distribution module, the first network message from the destination second queue, identifying the destination second server to which the first network message is to be transmitted, and transmitting the first network message to the destination second server through the network.

According to a second aspect, one or more embodiments of the present disclosure provide a network message processing device, including:
a reading unit, configured to read a first network message from a first queue maintained in a first server;
a querying unit, configured to query a queue mapping table maintained in a data processing unit to determine a destination second queue to which the first network message is to be transmitted, and store the first network message in the destination second queue, where the queue mapping table is used to record a mapping relationship between first queues maintained in the first server and second queues maintained in the data processing unit, and a quantity of the first queues is greater than a quantity of the second queues; and
a calling unit, configured to call a message distribution module in the data processing unit, and read, through the message distribution module, the first network message from the destination second queue and transmit the first network message to a destination second server through a network.

According to a third aspect, one or more embodiments of the present disclosure provide an electronic device, including: at least one processor and a memory;
where the memory stores computer-execution instructions; and
the at least one processor executes the computer-execution instructions stored in the memory, to cause the at least one processor to perform the network message processing method provided in the above first aspect.

According to a fourth aspect, one or more embodiments of the present disclosure provide a computer-readable storage medium, where the computer-readable storage medium stores computer-execution instructions, and when a processor executes the computer-execution instructions, the network message processing method provided in the above first aspect is implemented.

According to a fifth aspect, one or more embodiments of the present disclosure provide a computer program product, where the computer program product includes computer-execution instructions, and when a processor executes the computer-execution instructions, the network message processing method provided in the above first aspect is implemented.

The above descriptions are only preferred embodiments of the present disclosure and explanations of the applied technical principles. A person skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the above disclosure concept, for example, technical solutions formed by replacing the foregoing features with technical features with similar functions as disclosed in the present disclosure (but not limited thereto) with each other.

In addition, although the various operations are depicted in a specific order, it should not be understood as requiring these operations to be performed in the specific order shown or in a sequential order. Under certain circumstances, multitasking and parallel processing may be advantageous. Similarly, although several specific implementation details are contained in the foregoing discussions, these details should not be construed as limiting the scope of the present disclosure. Some features that are described in the context of separate embodiments can also be implemented in combination in a single embodiment. In contrast, various features described in the context of a single embodiment can also be implemented in a plurality of embodiments individually or in any suitable sub-combination.

Although the subject matter has been described in a language specific to structural features and/or logical actions of the methods, it should be understood that the subject matter defined in the appended claims is not necessarily limited to the specific features or actions described above. In contrast, the specific features and actions described above are merely exemplary forms of implementing the claims.

## Claims

1. A network message processing method, comprising:
reading (S201, S401) a first network message from a first queue maintained in a first server;
querying (S202, S402) a queue mapping table maintained in a data processing unit to determine a destination second queue to which the first network message is to be transmitted, and storing the first network message in the destination second queue, wherein the queue mapping table is used to record a mapping relationship between first queues maintained in the first server and second queues maintained in the data processing unit, and a quantity of the first queues is greater than a quantity of the second queues; and
calling (S203) a message distribution module in the data processing unit, and reading, through the message distribution module, the first network message from the destination second queue and transmitting the first network message to a destination second server through a network.

2. The network message processing method according to claim 1, wherein the calling (S203) the message distribution module in the data processing unit, and reading, through the message distribution module, the first network message from the destination second queue and transmitting the first network message to the destination second server through the network comprises:
calling (S403) the message distribution module in the data processing unit, and controlling the message distribution module to use a multi-thread mode, wherein one second queue in the data processing unit is allocated for each thread, and different threads correspond to different second queues; and
calling (S404) a first target thread corresponding to the destination second queue, and reading, through the first target thread, the first network message and transmitting the first network message to the destination second server through the network.

3. The network message processing method according to claim 2, wherein the reading (S404), through the first target thread, the first network message and transmitting the first network message to the destination second server through the network comprises:
determining the first queue from which the first network message comes, and determining a second target thread having a mapping relationship with the first queue, wherein each first queue of the first server is provided with a corresponding thread;
if the second target thread is not a same thread as the first target thread, reading, through the first target thread, the first network message and forwarding the first network message to the second target thread; and
transmitting, through the second target thread, the first network message to the destination second server through the network.

4. The network message processing method according to claim 3, further comprising:
determining a target second queue corresponding to the second target thread; and
updating, in the queue mapping table, a mapping relationship between the first queue and the destination second queue to a mapping relationship between the first queue and the target second queue.

5. The network message processing method according to claim 1, further comprising:
calling (S501) the message distribution module in the data processing unit, and obtaining a second network message, wherein the second network message carries a target first queue to which the second network message is to be transmitted;
storing (S502) the second network message in any one second queue in the data processing unit; and
reading (S503) the second network message from the any one second queue, identifying the target first queue to which the second network message is to be transmitted, and transmitting the second network message to the target first queue.

6. The network message processing method according to any one of claims 1 to 5, wherein the queue mapping table maintains a mapping relationship between a plurality of first queues and a plurality of second queues, wherein one first queue is mapped to only one second queue, and one second queue supports mapping of a plurality of first queues.

7. The network message processing method according to any one of claims 1 to 5, wherein the reading, through the message distribution module, the first network message from the destination second queue and transmitting the first network message to the destination second server through the network comprises:
reading, through the message distribution module, the first network message from the destination second queue, identifying the destination second server to which the first network message is to be transmitted, and transmitting the first network message to the destination second server through the network.

8. A network message processing device (60), comprising:
a reading unit (61), configured to read a first network message from a first queue maintained in a first server;
a querying unit (62), configured to query a queue mapping table maintained in a data processing unit to determine a destination second queue to which the first network message is to be transmitted, and store the first network message in the destination second queue, wherein the queue mapping table is used to record a mapping relationship between first queues maintained in the first server and second queues maintained in the data processing unit, and a quantity of the first queues is greater than a quantity of the second queues; and
a calling unit (63), configured to call a message distribution module in the data processing unit, and read, through the message distribution module, the first network message from the destination second queue and transmit the first network message to a destination second server through a network.

9. The network message processing device (60) according to claim 8, wherein the calling unit (63) is specifically configured to:
call the message distribution module in the data processing unit, and control the message distribution module to use a multi-thread mode, wherein one second queue in the data processing unit is allocated for each thread, and different threads correspond to different second queues; and
call a first target thread corresponding to the destination second queue, and read, through the first target thread, the first network message and transmit the first network message to the destination second server through the network.

10. The network message processing device (60) according to claim 9, wherein when reading, through the first target thread, the first network message and transmitting the first network message to the destination second server through the network, the calling unit (63) is specifically configured to:
determine the first queue from which the first network message comes, and determine a second target thread having a mapping relationship with the first queue, wherein each first queue of the first server is provided with a corresponding thread;
if the second target thread is not a same thread as the first target thread, read, through the first target thread, the first network message and forward the first network message to the second target thread; and
transmit, through the second target thread, the first network message to the destination second server through the network.

11. The network message processing device (60) according to claim 10, wherein the calling unit (63) is further configured to:
determine a target second queue corresponding to the second target thread; and
update, in the queue mapping table, a mapping relationship between the first queue and the destination second queue to a mapping relationship between the first queue and the target second queue.

12. The network message processing device (60) according to claim 8, wherein the network message processing device further includes a forwarding unit, configured to:
call the message distribution module in the data processing unit, and obtain a second network message, wherein the second network message carries a target first queue to which the second network message is to be transmitted;
store the second network message in any one second queue in the data processing unit; and
read the second network message from the any one second queue, identify the target first queue to which the second network message is to be transmitted, and transmit the second network message to the target first queue.

13. The network message processing device (60) according to any one of claims 8 to 12, wherein the queue mapping table maintains a mapping relationship between a plurality of first queues and a plurality of second queues, where one first queue is mapped to only one second queue, and one second queue supports mapping of a plurality of first queues.

14. The network message processing device (60) according to any one of claims 8 to 12, wherein the calling unit (63) is specifically configured to:
read, through the message distribution module, the first network message from the destination second queue, identify the destination second server to which the first network message is to be transmitted, and transmit the first network message to the destination second server through the network.

15. A computer-readable storage medium, wherein the computer-readable storage medium stores computer-execution instructions, and when a processor executes the computer-execution instructions, the network message processing method according to any one of claims 1 to 7 is implemented.

## Amended claims

### Amended claims in accordance with Rule 137(2) EPC.

1. A network message processing method, **characterized by** comprising:
reading (S201, S401) a first network message from a first queue maintained in a first server;
querying (S202, S402) a queue mapping table maintained in a data processing unit to determine a destination second queue to which the first network message is to be transmitted, and storing the first network message in the destination second queue, wherein the queue mapping table is used to record a mapping relationship between first queues maintained in the first server and second queues maintained in the data processing unit, and a quantity of the first queues is greater than a quantity of the second queues; and
calling (S203) a message distribution module in the data processing unit, and reading, through the message distribution module, the first network message from the destination second queue and transmitting the first network message to a destination second server through a network.

2. The network message processing method according to claim 1, wherein the calling (S203) the message distribution module in the data processing unit, and reading, through the message distribution module, the first network message from the destination second queue and transmitting the first network message to the destination second server through the network comprises:
calling (S403) the message distribution module in the data processing unit, and controlling the message distribution module to use a multi-thread mode, wherein one second queue in the data processing unit is allocated for each thread, and different threads correspond to different second queues; and
calling (S404) a first target thread corresponding to the destination second queue, and reading, through the first target thread, the first network message and transmitting the first network message to the destination second server through the network.

3. The network message processing method according to claim 2, wherein the reading (S404), through the first target thread, the first network message and transmitting the first network message to the destination second server through the network comprises:
determining a destination first queue from which the first network message comes, and determining a second target thread having a mapping relationship with the destination first queue, wherein the second target thread is a thread on the data processing unit and each first queue of the first server is provided with a corresponding thread;
if the second target thread is not a same thread as the first target thread, reading, through the first target thread, the first network message and forwarding the first network message to the second target thread; and
transmitting, through the second target thread, the first network message to the destination second server through the network.

4. The network message processing method according to claim 3, further comprising:
determining a target second queue corresponding to the second target thread; and
updating, in the queue mapping table, a mapping relationship between the destination first queue and the destination second queue to a mapping relationship between the destination first queue and the target second queue.

5. The network message processing method according to claim 1, further comprising:
calling (S501) the message distribution module in the data processing unit, and obtaining a second network message, wherein the second network message carries a target first queue to which the second network message is to be transmitted;
storing (S502) the second network message in any one second queue in the data processing unit; and
reading (S503) the second network message from the any one second queue, identifying the target first queue to which the second network message is to be transmitted, and transmitting the second network message to the target first queue.

6. The network message processing method according to any one of claims 1 to 5, wherein the queue mapping table maintains a mapping relationship between a plurality of first queues and a plurality of second queues, wherein one first queue is mapped to only one second queue, and one second queue supports mapping of a plurality of first queues.

7. The network message processing method according to any one of claims 1 to 5, wherein the reading, through the message distribution module, the first network message from the destination second queue and transmitting the first network message to the destination second server through the network comprises:
reading, through the message distribution module, the first network message from the destination second queue, identifying the destination second server to which the first network message is to be transmitted, and transmitting the first network message to the destination second server through the network.

8. A network message processing device (60), **characterized by** comprising:
a reading unit (61), configured to read a first network message from a first queue maintained in a first server;
a querying unit (62), configured to query a queue mapping table maintained in a data processing unit to determine a destination second queue to which the first network message is to be transmitted, and store the first network message in the destination second queue, wherein the queue mapping table is used to record a mapping relationship between first queues maintained in the first server and second queues maintained in the data processing unit, and a quantity of the first queues is greater than a quantity of the second queues; and
a calling unit (63), configured to call a message distribution module in the data processing unit, and read, through the message distribution module, the first network message from the destination second queue and transmit the first network message to a destination second server through a network.

9. The network message processing device (60) according to claim 8, wherein the calling unit (63) is specifically configured to:
call the message distribution module in the data processing unit, and control the message distribution module to use a multi-thread mode, wherein one second queue in the data processing unit is allocated for each thread, and different threads correspond to different second queues; and
call a first target thread corresponding to the destination second queue, and read, through the first target thread, the first network message and transmit the first network message to the destination second server through the network.

10. The network message processing device (60) according to claim 9, wherein when reading, through the first target thread, the first network message and transmitting the first network message to the destination second server through the network, the calling unit (63) is specifically configured to:
determine a destination first queue from which the first network message comes, and determine a second target thread having a mapping relationship with the destination first queue, wherein the second target thread is a thread on the data processing unit and each first queue of the first server is provided with a corresponding thread;
if the second target thread is not a same thread as the first target thread, read, through the first target thread, the first network message and forward the first network message to the second target thread; and
transmit, through the second target thread, the first network message to the destination second server through the network.

11. The network message processing device (60) according to claim 10, wherein the calling unit (63) is further configured to:
determine a target second queue corresponding to the second target thread; and
update, in the queue mapping table, a mapping relationship between the destination first queue and the destination second queue to a mapping relationship between the destination first queue and the target second queue.

12. The network message processing device (60) according to claim 8, wherein the network message processing device further includes a forwarding unit, configured to:
call the message distribution module in the data processing unit, and obtain a second network message, wherein the second network message carries a target first queue to which the second network message is to be transmitted;
store the second network message in any one second queue in the data processing unit; and
read the second network message from the any one second queue, identify the target first queue to which the second network message is to be transmitted, and transmit the second network message to the target first queue.

13. The network message processing device (60) according to any one of claims 8 to 12, wherein the queue mapping table maintains a mapping relationship between a plurality of first queues and a plurality of second queues, where one first queue is mapped to only one second queue, and one second queue supports mapping of a plurality of first queues.

14. The network message processing device (60) according to any one of claims 8 to 12, wherein the calling unit (63) is specifically configured to:
read, through the message distribution module, the first network message from the destination second queue, identify the destination second server to which the first network message is to be transmitted, and transmit the first network message to the destination second server through the network.

15. A computer-readable storage medium, **characterized in that**, the computer-readable storage medium stores computer-execution instructions, and when a processor executes the computer-execution instructions, the network message processing method according to any one of claims 1 to 7 is implemented.
